(19) **Europäisches Patentamt / European Patent Office / Office européen des brevets**

(11) **EP 4 579 860 A1**

(12) **EUROPEAN PATENT APPLICATION**
published in accordance with Art. 153(4) EPC

(43) Date of publication:
**02.07.2025 Bulletin 2025/27**

(21) Application number: **22969787.5**

(22) Date of filing: **30.12.2022**

(51) International Patent Classification (IPC):
**H01M 10/0583** (2010.01)   **H01M 10/04** (2006.01)
**H01M 4/13** (2010.01)

(52) Cooperative Patent Classification (CPC):
**H01M 4/00; H01M 4/13; H01M 10/04;**
**H01M 10/0583;** H01M 2004/021; H01M 2004/027;
Y02E 60/10

(86) International application number:
**PCT/CN2022/143970**

(87) International publication number:
**WO 2024/138644 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• **LIAO, Ruhu
Ningde, Fujian 352100 (CN)**

• **DAI, Ya
Ningde, Fujian 352100 (CN)**
• **WEI, Jingjing
Ningde, Fujian 352100 (CN)**
• **WANG, Jianlei
Ningde, Fujian 352100 (CN)**
• **LIN, Jiang
Ningde, Fujian 352100 (CN)**
• **WU, Bingzhao
Ningde, Fujian 352100 (CN)**
• **YANG, Rui
Ningde, Fujian 352100 (CN)**

(74) Representative: **Gong, Jinping
CocreateIP
Neumarkter Straße 21
81673 München (DE)**

(54) **ELECTRODE ASSEMBLY, BATTERY CELL, BATTERY AND ELECTRIC DEVICE**

(57)    Some embodiments of this application provide an electrode assembly (10), a battery cell, a battery, and an electrical device. The electrode assembly (10) includes at least one first electrode plate (1), where the first electrode plate (1) is bent and includes: a current collector (11); and an active material layer (12), disposed on the current collector (11). The active material layer (12) includes a material-removed region (13) in at least a part of bends of the first electrode plate. The material-removed region (13) extends along a width direction (W) of the first electrode plate (1). A depth of the material-removed region (13) does not exceed a thickness of the active material layer (12) at which the material-removed region is located.

FIG. 4

EP 4 579 860 A1

**Description**

**TECHNICAL FIELD**

This application relates to the technical field of batteries, and in particular, to an electrode assembly, a battery cell, a battery, and an electrical device.

**BACKGROUND**

Due to advantages such as a high energy density, a high power density, reusability for many cycles, and a long shelf life, batteries such as lithium-ion batteries have been widely used in electrical devices such as an electric vehicle.

However, the performance of an electrode assembly of a battery cell currently available is still not high enough. Therefore, how to improve the performance of electrode assemblies has been a challenge in the industry.

**SUMMARY**

An objective of this application is to improve performance of an electrode assembly.

According to a first aspect of this application, an electrode assembly is provided, including at least one first electrode plate. The first electrode plate is bent and includes:

a current collector; and
an active material layer, disposed on the current collector, where the active material layer includes a material-removed region in at least a part of bends of the first electrode plate, the material-removed region extends along a width direction of the first electrode plate, and a depth of the material-removed region does not exceed a thickness of the active material layer at which the material-removed region is located.

In this embodiment, a material-removed region is disposed in at least a part of the bends of the active material layer of the first electrode plate. Due to the relatively low toughness of the active material layer, the material-removed region disposed on the active material layer makes the first electrode plate more easily bendable, enables accurate folding at a preset position, reduces the amount of misalignment between different layers of the electrode plate, and improves the flatness of the folded first electrode plate, thereby improving the performance of the electrode assembly. Moreover, the depth of the material-removed region does not exceed the thickness of the active material layer at which the material-removed region is located, thereby limiting the maximum depth of the material-removed region. The material-removed region is created at an appropriate depth without removing the material of the current collector, thereby avoiding an excessive depth of the material-removed region that excessively reduces the strength at the bend, preventing the electrode plate from breaking off during folding, improving the yield rate of the electrode assembly during production, and also preventing the electrode plate from breaking off at the material-removed region due to expansion and deformation of the electrode plate after long-term use of the battery cell.

In some embodiments, the current collector is coated with the active material layer on both sides. The material-removed region is disposed on the active material layer on at least one side.

In these embodiments, a material-removed region may be disposed on the active material layer on at least one side of the current collector based on the bending requirement of the first electrode plate, thereby making the first electrode plate more easily bendable, enabling accurate folding at the preset position, reducing the amount of misalignment between different layers of the electrode plate, improving the flatness of the folded first electrode plate, and in turn, improving the performance of the electrode assembly. Moreover, the above arrangement prevents the electrode plate from breaking off during folding, improves the yield rate of the electrode assembly during production, and also prevents the electrode plate from breaking off at the material-removed region due to expansion and deformation of the electrode plate after long-term use of the battery cell.

In some embodiments, among the active material layers on both sides, the active material layer on a first side includes a plurality of material-removed regions disposed at intervals along an extension direction of the first electrode plate.

In these embodiments, a plurality of material-removed regions are disposed at intervals on the active material layer on the first side. Appropriate intervals may be set so that the material-removed region is located at the bend to reduce the strength at the bend, thereby making the first electrode plate more easily bendable, enabling accurate folding at the preset position, reducing the amount of misalignment between different layers of the electrode plate, improving the flatness of the folded first electrode plate, and in turn, improving the performance of the electrode assembly.

In some embodiments, among the active material layers on both sides, the active material layer on a second side includes a plurality of material-removed regions disposed at intervals along the extension direction.

In this embodiment, the material-removed region is disposed on the active material layers on both sides. The material-removed region may be disposed on both the inner side and the outer side in at least a part of the bends. With the strength at the bend being the same, the above arrangement reduces the depth of the material-removed region on a single side, makes the force distribution more uniform at the bend of the first electrode plate, prevents a single side from being much stressed at the bend during the bending, and avoids breakage of the electrode plate, thereby improving the yield rate of the electrode assembly during production, and also preventing the electrode plate from breaking off at the material-removed region due to expansion and deformation of the electrode plate after long-term use of the battery cell.

In some embodiments, the material-removed region is disposed on the active material layers on both sides at the same bend.

In this embodiment, the material-removed region is disposed on the active material layers on both sides at the same bend, so that the material-removed region is disposed on both the inner side and the outer side at the bend. With the strength at the bend being the same, the above arrangement reduces the depth of the material-removed region on a single side, makes the force distribution more uniform at the bend of the first electrode plate, prevents a single side from being much stressed at the bend during the bending, and avoids breakage of the electrode plate, thereby improving the yield rate of the electrode assembly during production, and also preventing the electrode plate from breaking off at the material-removed region due to expansion and deformation of the electrode plate after long-term use of the battery cell.

In some embodiments, in the extension direction, the plurality of material-removed regions on the active material layer on the first side are disposed at a first preset interval. The plurality of material-removed regions on the active material layer on the second side are disposed at a second preset interval. The second preset interval is n times the first preset interval, where n = 1, 2, 3....

In these embodiments, by setting appropriate intervals for the material-removed regions on the active material layers on the two sides separately, the material-removed regions at the bend can be configured based on the actual folding needs, thereby ensuring convenience of folding and preventing electrode plate breakage caused by excessive reduction of strength.

In some embodiments, the material-removed region is disposed on the active material layer on a first side alone. The depth of the material-removed region is h, the thickness of the active material layer on the first side is t1, and the thickness of the active material layer on a second side is t2, satisfying: $(t1 + t2) \times 10\% \leq h \leq t1$.

In these embodiments, the depth of the material-removed region is controlled to fall within an appropriate value range, thereby making the first electrode plate more easily bendable, enabling accurate folding at the preset position, reducing the amount of misalignment between different layers of the electrode plate, improving the flatness of the folded first electrode plate, and in turn, improving the performance of the electrode assembly. Moreover, the above arrangement prevents excessive reduction of the strength at the bend caused by an excessive depth of the material-removed region, thereby preventing the electrode plate from breaking off during folding, improving the yield rate of the electrode assembly during production, and also preventing the electrode plate from breaking off at the material-removed region due to expansion and deformation of the electrode plate after long-term use of the battery cell.

In some embodiments,

$$(t1 + t2) \times 20\% \leq h \leq (t1 + t2) \times 40\%.$$

In these embodiments, by setting the depth of the material-removed region to fall within a preferred range, a better trade-off of the first electrode plate is achieved between bendability and prevention of breakage.

In some embodiments, the thicknesses of the active material layers on the two sides are t1 and t2 respectively. The depth of the material-removed region disposed on the active material layer on the first side is h1, and the depth of the material-removed region disposed on the active material layer on the second side is h2, satisfying: $(t1 + t2) \times 10\% \leq h1 + h2 \leq t1 + t2$.

In these embodiments, the sum of the depths of the material-removed regions on the two sides is controlled to fall within an appropriate value range, thereby making the first electrode plate more easily bendable, enabling accurate folding at the preset position, reducing the amount of misalignment between different layers of the electrode plate, improving the flatness of the folded first electrode plate, and in turn, improving the performance of the electrode assembly. Moreover, the above arrangement prevents excessive reduction of the strength at the bend caused by an excessive depth of the material-removed region, thereby preventing the electrode plate from breaking off during folding, improving the yield rate of the electrode assembly during production, and also preventing the electrode plate from breaking off at the material-removed region due to expansion and deformation of the electrode plate after long-term use of the battery cell.

In some embodiments,

$$(t1 + t2) \times 20\% \leq h1 + h2 \leq (t1 + t2) \times 40\%.$$

In these embodiments, by setting the sum of the depths of the material-removed regions on the two sides to fall within a preferred range, a better trade-off of the first electrode plate is achieved between bendability and prevention of breakage.

In some embodiments, the active material layer includes a plurality of active material regions spaced apart along an extension direction of the first electrode plate. The material-removed region is formed between two adj acent active material regions.

In these embodiments, the depth of the material-removed region is equal to the thickness of the active material layer. In this way, the current collector is not adversely affected during formation of the material-removed region. Moreover, the material-removed region can be formed directly in a process of applying a slurry to form an active material layer, thereby eliminating the subsequent additional step of processing the material-removed region, and improving the production efficiency of the first electrode plate.

In some embodiments, the material-removed region extends continuously in the width direction.

In these embodiments, the material-removed region extends continuously along the width direction, thereby facilitating processing, and achieving a superior effect of guiding the bending of the first electrode plate. Moreover, the material-removed region processed in this way can achieve a relatively narrow width, improve the precision of the bending position, and reduce the amount of misalignment between two adjacent layers of the electrode plate stacked in the electrode assembly, thereby endowing the battery with good electrochemical performance.

In some embodiments, the material-removed region penetrates the active material layer in the width direction.

In these embodiments, the material-removed region extends along the entire width of the active material layer, thereby making the first electrode plate bendable along the material-removed region over the entire width, making the first electrode plate more easily bendable, improving the precision of the bending position, reducing the amount of misalignment between two adjacent layers of the electrode plate stacked in the electrode assembly, thereby endowing the battery with good electrochemical performance.

In some embodiments, the material-removed region gradually increases in width from a bottom to an opening in the extension direction of the first electrode plate.

In these embodiments, the cross-section of the material-removed region is configured as trapezoidal. Therefore, when the material-removed region is located on the inner side of the bend, even if the radius of curvature on the inner side of the bend is relatively small or the width of the material-removed region along the extension direction is relatively small, interference is still not prone to occur between the two sides of the opening. In this way, the first electrode plate is smoothly bendable without powder shedding. When the material-removed region is located on the outer side of the bend, due to a relatively large radius of curvature on the outer side of the bend, the opening can be further widened during bending of the electrode plate to fit the relatively large radius of curvature, so that the first electrode plate can be bent smoothly.

In some embodiments, a plurality of through-holes are created in at least a part of the bends of the first electrode plate. The plurality of through-holes are spaced apart along the width direction.

In these embodiments, a plurality of through-holes are created at the bend to also reduce the strength at the bend. Due to the relatively small thickness of the first electrode plate, this structure avoids the need to precisely control the depth of the groove, and can lower the requirement on the processing precision. In addition, the through-holes can substantially reduce the strength of the second electrode plate, and facilitate the bending.

In some embodiments, the material-removed region is disposed in a part of the bends, and the through-hole is disposed in another part of the bends.

In these embodiments, the material-removed region is disposed in a part of the bends, and the through-hole is disposed in another part of the bends, so that the material-removed region or through-hole can be flexibly disposed as required.

In some embodiments, both the material-removed region and the through-hole are disposed in at least a part of the bends.

In these embodiments, both the material-removed region and the through-hole are disposed at the same bend, so that the material-removed region and the through-hole together play a role in reducing the strength at the bend. Due to the through-hole, the depth of the material-removed region can be appropriately reduced to achieve the same strength, thereby alleviating the force on the first electrode plate at the bend, and reducing the risk of breakage while ensuring bendability of the first electrode plate.

In some embodiments, the number of the through-holes is N, a dimension of the through-hole along the width direction is E, and a width of the first electrode plate is D, satisfying: $D \times 10\% \leq N \times E \leq D \times 90\%$.

In these embodiments, a first electrode plate that is easy to fold is formed by controlling the depth of the material-removed region and the proportion of the total dimensions of the plurality of through-holes along the width direction to the width of the first electrode plate. In this way, a composite electrode plate is easy to fold to form an electrode assembly without breaking.

In some embodiments, the electrode assembly further includes a second electrode plate. At least one first electrode plate is bent to form at least one bend portion. The bend portion includes at least one bend section and at least two straight sections. Two adjacent straight sections are interconnected by the bend section.

For each bend portion, the second electrode plate is disposed between every two adjacent straight sections. The second electrode plate is of an opposite polarity to the adjacent first electrode plate.

In these embodiments, in view of a relatively small bending radius of a stacked-type electrode assembly at the bend, a material-removed region of an appropriate depth is disposed at the bend, thereby making the first electrode plate more easily bendable, enabling accurate folding at the preset position, reducing the amount of misalignment between different layers of the electrode plate, improving the flatness of the folded first electrode plate, and in turn, improving the performance of the electrode assembly. Moreover, the above arrangement prevents excessive reduction of the strength at the bend caused by an excessive depth of the material-removed region, thereby preventing the electrode plate from breaking off during folding, improving the yield rate of the electrode assembly during production, and also preventing the electrode plate from breaking off at the material-removed region due to expansion and deformation of the electrode plate after long-term use of the battery cell.

In some embodiments, the material-removed region is located in the bend section and extends along the width direction.

In these embodiments, the material-removed region is disposed in the bend section, thereby guiding the first electrode plate to fold along the material-removed region, making the first electrode plate more easily bendable, enabling accurate folding at the preset position, reducing the amount of misalignment between different layers of the electrode plate, improving the flatness of the folded first electrode plate, and in turn, improving the performance of the electrode assembly.

In some embodiments, the electrode assembly further includes at least two separation pieces stacked together with the at least one first electrode plate and bent together to form the at least one bend portion. The first electrode plate is disposed between the two adjacent separation pieces.

In these embodiments, by bending the separation piece and the first electrode plate together, the first electrode plate can be insulated from the second electrode plate by the separation piece, thereby improving the performance and safety of the electrode assembly in use.

In some embodiments, the first electrode plate is a negative electrode plate.

These embodiments can both improve the energy utilization rate of the electrode assembly and reduce the cost of the electrode assembly.

According to a second aspect of this application, a battery cell is provided. The battery cell includes the electrode assembly disclosed in the foregoing embodiment.

According to a third aspect of this application, a battery is provided. The battery includes the battery cell disclosed in the foregoing embodiment.

According to a fourth aspect of this application, an electrical device is provided. The electrical device includes the battery cell and/or battery disclosed in the foregoing embodiment and configured to provide electrical energy for the electrical device.

## BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.

FIG. 1 is a schematic structural diagram of a battery mounted in a vehicle according to some embodiments of this application;

FIG. 2 is an exploded view of a battery according to a first embodiment of this application;

FIG. 3 is an outside view of a battery cell according to some embodiments of this application;

FIG. 4 is an expanded view of a first electrode plate in an electrode assembly according to a first embodiment of this application;

FIG. 5 is a schematic structural diagram of an electrode assembly according to a first embodiment of this application;

FIG. 6 is an expanded view of a first electrode plate in an electrode assembly according to a second embodiment of this application;

FIG. 7 is a schematic structural diagram of an electrode assembly according to a second embodiment of this application;

FIG. 8 is an expanded view of a first electrode plate in an electrode assembly according to a third embodiment of this application;

FIG. 9 is a schematic structural diagram of an electrode assembly according to a third embodiment of this application;

FIG. 10 is a schematic structural diagram of a plurality of active material regions disposed at intervals on a current collector;

FIG. 11 is an expanded view of a first electrode plate in an electrode assembly according to a fourth embodiment of this application; and

FIG. 12 is a cross-sectional view of sectioning along an A-A line shown in FIG. 11.

The drawings are not drawn to scale.

List of reference numerals:

100-battery cell; 101-housing; 102-end cap; 103-electrode terminal;

10-electrode assembly; 1-first electrode plate; 11-current collector; 12-active material layer; 121-active material region; 13-material-removed region; 131-bottom; 132-opening; 14-through-hole; 2-second electrode plate; 3-separation piece; S-bend portion; S1-straight section; S2-bend section; X-opening direction; Y-width direction; Z-stacking direction; T-thickness direction; L-extension direction;

200-battery; 201-box assembly; 201A-box; 201B-cover;

300-vehicle; 301-axle bridge; 302. wheel; 303. motor; 304. controller.

## DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of embodiments of this application, the term "a plurality of" means two or more (including two). Similarly, "a plurality of groups" means two or more groups (including two groups), and "a plurality of pieces" means two or more pieces (including two pieces).

A direction or a positional relationship described herein by using the terms such as "up", "down", "top", "bottom", "front", "back", "in", or "out" is merely intended for ease of describing this application, but does not indicate or imply that the described device is necessarily located in the specified direction or constructed or operated in the specified direction, and therefore, is not to be understood as a limitation on the protection scope of this application.

In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range. The directional terms appearing in the following description indicate the directions shown in the drawings, but are not intended to limit specific structures in this application.

In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

Reference to an "embodiment" herein means that a specific feature, structure or characteristic described with reference to this embodiment may be included in at least some embodiments of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

Currently, a battery cell generally includes a housing and an electrode assembly accommodated in the housing, and the housing is filled with an electrolyte. An electrode assembly is mainly formed by stacking or winding a first electrode plate and a second electrode plate that are of opposite polarities. Generally, an insulator such as a separator is disposed between the first electrode plate and the second electrode plate. The parts, coated with an active material, of the first electrode plate and the second electrode plate, constitute a body portion of the electrode assembly. The parts, coated with no active material, of the first electrode plate and the second electrode plate respectively, constitute a first tab and a second tab respectively. In a battery cell, the first electrode plate may be a positive electrode plate. The positive electrode plate includes a positive current collector and a positive active material layer disposed on both sides of the positive current collector. The positive current collector may be a metal foil or a composite current collector. For example, the metal foil may be made of aluminum or stainless steel with a silver finish, or stainless steel, copper, aluminum, nickel, carbon electrode, carbon, nickel, titanium, or the like. The composite current collector may include a polymer material substrate and a metal layer. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene, polyethylene terephthalate, polybutylene terephthalate, polystyrene, or polyethylene. The positive active material layer may include at least one of the following materials: lithium-containing phosphate, lithium transition metal oxide, or a modified compound thereof. However, this application is not limited to such materials, and other conventional materials usable as a positive active material of a battery may be used instead. Of such positive active materials, one may be used alone, or at least two may be used in combination. The second electrode plate may be a negative electrode plate. The negative electrode plate includes a negative current collector and a negative active material layer disposed on both sides of the negative current collector. The negative current collector may be a metal foil or a composite current collector. For example, the metal foil may be made of aluminum or stainless steel with a silver finish, or stainless steel, copper, aluminum, nickel, carbon electrode, carbon, nickel, titanium, or the like. The composite current collector may include a polymer material substrate and a metal layer. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene, polyethylene terephthalate, polybutylene terephthalate, polystyrene, or polyethylene. The negative active material layer may be a negative active material well-known for use in a battery in the art. As an example, the negative active material may include at least one of the following materials: artificial graphite, natural graphite, soft carbon, hard carbon, silicon-based material, tin-based material, lithium titanium oxide, and the like. Alternatively, the first electrode plate is a negative electrode plate, and correspondingly, the second electrode plate is a positive electrode plate. The first tab and the second tab may be located at one end of the body portion together or at two ends of the body portion respectively. In a charge-discharge process of the battery cell, the positive active material and the negative active material react with an electrolyte solution, and a tab is connected to an electrode terminal to form a current circuit.

A stacked-type electrode assembly has been gradually used widely in battery cells. It is found through research that the performance of electrode assemblies is not superior enough currently. One of the important factors is that it is difficult to accurately fold a continuous electrode plate at a preset position in the process of folding, thereby resulting in a large amount of misalignment between different layers of the electrode plate and making the flatness of the electrode plate relatively low after folding.

To solve the above problem, the applicant hereof comes up with an idea that a nick may be created at the folding position to guide the continuous electrode plate to fold at a preset position. However, it is difficult to determine the relationship and proportion between the depth of the nick and the thickness of the electrode plate. The proportion of the depth of the nick directly affects the degree of difficulty of folding the continuous electrode plate. When the depth of the nick is relatively small, it is still difficult to fold the continuous electrode plate normally, and the effect of improving the performance of the electrode assembly is insignificant. When the depth of the nick is relatively large, the strength of the continuous electrode plate at the folding position is reduced greatly, and the electrode plate is prone to break when being folded, thereby resulting in a relatively low yield rate of the electrode assemblies during production or potentially breaking the electrode plate at the nick due to expansion and deformation of the electrode plate after long-term use of the battery cell.

In view of the problem analyzed above, this application discloses an electrode assembly. The electrode assembly includes at least one first electrode plate. The first electrode plate is bent and includes: a current collector and an active material layer. The active material layer is disposed on the current collector. The active material layer includes a material-removed region in at least a part of bends of the first electrode plate. The material-removed region extends along a width direction of the first electrode plate. A depth of the material-removed region does not exceed a thickness of the active material layer at which the material-removed region is located.

In this embodiment, the material-removed region disposed on the active material layer makes the first electrode plate more easily bendable, enables accurate folding at the preset position, reduces the amount of misalignment between different layers of the electrode plate, improves the flatness of the folded first electrode plate, and in turn, improves the performance of the electrode assembly. Moreover, the depth of the material-removed region does not exceed the thickness of the active material layer at which the material-removed region is located, thereby preventing excessive reduction of the strength at the bend caused by an excessive depth of the material-removed region, and in turn, preventing the electrode plate from breaking off during folding, improving the yield rate of the electrode assembly during production, and also preventing the electrode plate from breaking off at the material-removed region due to expansion and deformation of the electrode plate after long-term use of the battery cell.

The battery cell according to an embodiment of this application is applicable to a battery and an electrical device that uses the battery cell. The battery is also applicable to the electrical device.

The battery according to an embodiment of this application is applicable to various electrical devices. The electrical device may be an electric power cart, an electric vehicle, a ship, a spacecraft, or the like. For example, the types of the spacecraft include an airplane, a rocket, a space shuttle, a spaceship, and the like.

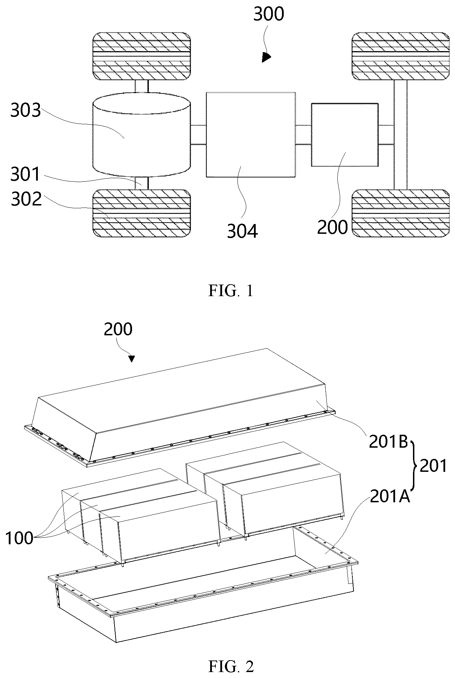

As shown in FIG. 1, the electrical device may be a vehicle 300 such as a new energy vehicle. The new energy vehicle may be a battery electric vehicle, a hybrid electric vehicle, a range-extended electric vehicle, or the like. Alternatively, the electrical device may be an unmanned aerial vehicle, a ship, or the like. Specifically, the vehicle 300 may include an axle 301, wheels 302 connected to the axle 301, a motor 303, a controller 304, and a battery 200. The motor 303 is configured to drive the axle 301 to rotate. The controller 304 is configured to control the motor 303 to operate. The battery 200 may be disposed at the bottom, head, or rear of the vehicle 300, and configured to provide electrical energy for the operation of the motor 303 and other components in the vehicle.

As shown in FIG. 2, the battery 200 includes a box assembly 201 and a battery cell 100. The battery 200 may contain one or more battery cells 100. If there are a plurality of battery cells 100, the plurality of battery cells 100 may be connected in series, parallel, or series-and-parallel pattern. The series-and-parallel pattern means a combination of series connection and parallel connection of the plurality of battery cells 100. The plurality of battery cells 100 may be connected in series, parallel, or series-and-parallel pattern to form a battery module first, and then a plurality of battery modules are connected in series, parallel, or series-and-parallel pattern to form a whole for being accommodated in the box assembly 201. Alternatively, all battery cells 100 are directly connected in series, parallel, or series-and-parallel pattern, and then the entirety of all battery cells 100 is accommodated in the box assembly 201.

The box assembly 201 may be a part of a battery pack, and the box assembly 201 is detachably mounted in an electrical device; or, the box assembly 201 may be a space formed by a structural component in an electrical device and configured to accommodate the battery cells 100. For example, when the battery cells 100 are used in a vehicle 300, the box assembly 201 is a space formed by the frame of the vehicle and configured to accommodate the battery cells 100.

The box assembly 201 is hollowed out and configured to accommodate one or more battery cells 100. The box assembly 201 may be in different shapes and sizes depending on the shape, quantity, combination manner, and other requirements of the battery cells 100 to be accommodated. For example, the box assembly 201 may include a box 201A and a cover 201B. The box 201A includes an opening. The cover 201B is configured to close the opening of the box 201A. In FIG. 2, the box 201A is in the form of a rectangular columnar structure based on the arrangement of a plurality of battery cells 100.

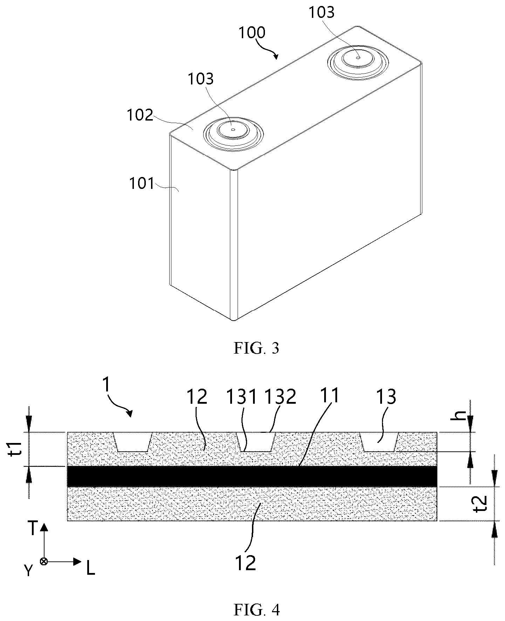

FIG. 3 is a schematic outside view of a battery cell 100 according to some embodiments. The battery cell may be a secondary battery. The secondary battery is a battery cell that is reusable through activation of an active material in the battery cell by charging the battery cell 100 that is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. The specific type of the battery cell is not limited herein.

In some embodiments, the battery cell may include a shell and an electrode assembly. The shell is configured to package components such as the electrode assembly and the electrolyte. The shell may be a steel shell, an aluminum shell, a plastic shell (for example, polypropylene), a composite metal shell (for example, a copper-aluminum composite shell), or an aluminum laminated film.

As an example, the battery cell may be a cylindrical battery cell, a prismatic battery cell, a pouch-type battery cell, or a battery cell of another shape. The prismatic battery cells include a square-shell battery cell, a blade battery cell, and a polygonal prism battery. An example of the polygonal prism battery is hexagonal prism battery. The type of the battery cell is not particularly limited herein.

In some embodiments, the shell includes an end cap 102 and a housing 101. The housing 101 includes an opening, and the end cap 102 closes the opening to form a closed space configured to accommodate the electrode assembly and other substances such as electrolyte. The housing 101 may include one or more openings. Accordingly, one or more end caps 102 may be disposed.

In some embodiments, at least one electrode terminal 103 is disposed on the shell. The electrode terminal 103 is electrically connected to a tab of the electrode assembly. The electrode terminal 103 may be connected to the tab directly, or in an indirect manner through an adapter component. The electrode terminal 103 may be disposed on the end cap 102 or on the housing 101.

The structure of the electrode assembly 10 in the battery cell 100 of this application is described below.

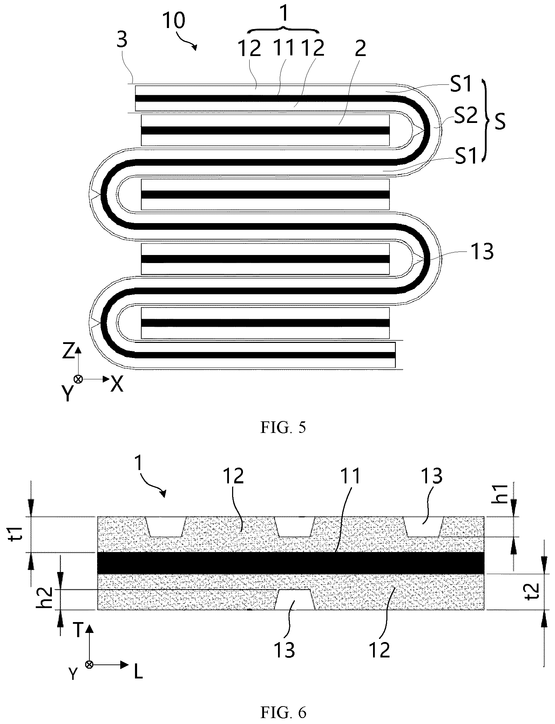

In some embodiments, as shown in FIG. 4 and FIG. 5, this application provides an electrode assembly 10. The electrode assembly includes at least one first electrode plate 1. The first electrode plate 1 is bent, and the first electrode plate 1 includes: a current collector 11 and an active material layer 12. The active material layer 12 is disposed on the current collector 11. The active material layer 12 includes a material-removed region 13 in at least a part of bends of the first electrode plate. The material-removed region 13 extends along a width direction Y of the first electrode plate 1. A depth of the material-removed region 13 does not exceed a thickness of the active material layer 12 at which the material-removed region is located.

FIG. 4 is a schematic structural diagram of the first electrode plate 1 in an unfolded state, in which L is the extension direction, that is, the length direction, of the first electrode plate 1, T is the thickness direction of the first electrode plate 1, and Y is the width direction of the first electrode plate 1. FIG. 5 is a schematic structural diagram of an electrode assembly 10 formed by folding, where the extension direction L of the first electrode plate 1 is an extension path of the electrode plate after bending in the electrode assembly 10, X is the opening direction of the bend section S2, Y is also the width direction of the electrode assembly 10, and Z is the stacking direction of a plurality of straight sections S1.

The number of first electrode plates 1 may be one, two or more. When at least two first electrode plates 1 are disposed, the at least two first electrode plates 1 are stacked up and bent together. The at least two first electrode plates 1 stacked up mean that all of the first electrode plates 1 are stacked up along the thickness direction T. One first electrode plate 1 here means a first electrode plate 1 located on the same layer when being in the unfolded state. One first electrode plate 1 may be an elongated continuous electrode plate, or may include a plurality of cut electrode plates spaced apart along the extension direction of the first electrode plate 1, as long as the at least one first electrode plate 1 forms a continuous bendable composite electrode after being combined. The bent structure may form a stacked-type electrode assembly 10 or a jelly-roll electrode assembly 10. When the bending radius is relatively small, a material-removed region 13 may be disposed at the bend.

The active material layer 12 is disposed on a surface, perpendicular to the thickness direction T, of the current collector 11. The active material layer 12 may be disposed on just one side of the current collector 11, or the active material layer 12 may be disposed on both sides of the current collector 11. The first electrode plate 1 is a positive electrode plate, the current collector 11 is a positive current collector, and the active material layer 12 is a positive active material layer; or, the first electrode plate 1 is a negative electrode plate, and the current collector 11 is a negative current collector. The materials of the positive and negative current collectors as well as the positive and negative active material layers have been described earlier herein.

After the first electrode plate 1 is bent, a plurality of bends may be formed. The bends are positions at which the extension direction of the first electrode plate 1 is changed. The active material layer 12 includes a material-removed region 13 in at least a part of the bends. The material-removed region 13 is a region with the material removed at a preset depth from the surface of the active material layer 12 to reduce the strength of the first electrode plate 1 at the bend and make the first electrode plate 1 easily bendable. The material-removed region 13 extends along the width direction Y of the first electrode plate 1, and may extend continuously or intermittently, and may extend over the entire width of the first electrode plate 1 or over a part of the width. The depth of the material-removed region 13 does not exceed the thickness of the active material layer 12 at which the material-removed region is located, so that the depth of the material-removed region 13 does not affect the current collector 11.

The body portion of the active material layer 12 is a uniform thickness. In order to prevent a large stress generated at the edge of the active material layer 12, the thickness at the edge gradually decreases. For example, the edge is gradually thinned to form a slope so that the current material layer is transitionally connected to the current collector 11 at the edge. Accordingly, the depth of the material-removed region 13 at the edge of the active material layer 12 also decreases gradually, as long as the depth of the material-removed region 13 does not affect the current collector 11.

In this embodiment, a material-removed region 13 is disposed in at least a part of the bends of the active material layer 12 of the first electrode plate 1. Due to the relatively low toughness of the active material layer 12, the material-removed region 13 disposed on the active material layer 12 makes the first electrode plate 1 more easily bendable, enables accurate folding at a preset position, reduces the amount of misalignment between different layers of the electrode plate, and improves the flatness of the folded first electrode plate 1, thereby improving the performance of the electrode assembly 10.

Moreover, the depth of the material-removed region 13 does not exceed the thickness of the active material layer 12 at which the material-removed region is located, thereby limiting the maximum depth of the material-removed region 13. The material-removed region 13 is created at an appropriate depth without removing the material of the current collector 11, thereby avoiding an excessive depth of the material-removed region 13 that excessively reduces the strength at the bend, preventing the electrode plate from breaking off during folding, improving the yield rate of the electrode assembly 10 during production, and also preventing the electrode plate from breaking off at the material-removed region 13 due to expansion and deformation of the electrode plate after long-term use of the battery cell.

In some embodiments, the current collector 11 is coated with the active material layer 12 on both sides. The material-removed region 13 is disposed on the active material layer 12 on at least one side.

For example, the material-removed region 13 may be disposed on the active material layer 12 on a single side, or the material-removed region 13 is disposed on the active material layers 12 on both sides. The two sides of the current collector 11 are the two sides of the current collector 11 along the thickness direction T.

In these embodiments, the material-removed region may be disposed on the active material layer 12 on at least one side of the current collector based on the bending requirement of the first electrode plate 1, thereby making the first electrode plate 1 more easily bendable, enabling accurate folding at the preset position, reducing the amount of misalignment between different layers of the electrode plate, improving the flatness of the folded first electrode plate 1, and in turn, improving the performance of the electrode assembly 10. Moreover, the above arrangement prevents the electrode plate from breaking off during folding, improves the yield rate of the electrode assembly 10 during production, and also prevents the electrode plate from breaking off at the material-removed region 13 due to expansion and deformation of the electrode plate after long-term use of the battery cell.

In some embodiments, among the active material layers 12 on both sides, the active material layer 12 on a first side includes a plurality of material-removed regions 13 disposed at intervals along an extension direction L of the first electrode plate 1.

In the schematic diagram of the first electrode plate 1 in an unfolded state in FIG. 4, a plurality of material-removed regions 13 are disposed at intervals on the active material layer 12 on the first side along the extension direction L. Each material-removed region 13 is located at a position to be bent. For example, the plurality of material-removed regions 13 may be disposed uniformly at equal intervals. The distance between two adjacent material-removed regions 13 is configured in such a way that a material-removed region 13 is disposed at each bend. In this way, after the first electrode plate 1 is bent to form the electrode assembly 10 shown in FIG. 5, the material-removed region 13 is disposed at each bend. In the extension direction L of the first electrode plate 1, a plurality of material-removed regions 13 on the first side are located on the inner side and the outer side alternately at the bend. In practice, although the spacing between adjacent material-removed regions 13 may be adjusted considering that the material-removed regions 13 are located on the inner side and outer side at the bend, this error is ignored herein, and the plurality of material-removed regions 13 are considered to be disposed uniformly at equal intervals.

In the first electrode plate 1 in FIG. 4, a plurality of material-removed regions 13 are disposed on the active material layer 12 on the first side alone, thereby reducing the difficulty of processing. The material-removed regions 13 disposed on a single side may be processed by using a laser or another tool. The parallelism between the plurality of material-removed regions 13 is high. In other words, the edges of the folded electrode assembly 10 along a stacking direction Z are neat and tidy. The folding may be performed with the aid of an automatic tapping mechanism, so as to make it convenient to fold in place.

In these embodiments, a plurality of material-removed regions 13 are disposed at intervals on the active material layer 12 on the first side. Appropriate intervals may be set so that the material-removed region 13 is located at the bend to reduce the strength at the bend, thereby making the first electrode plate 1 more easily bendable, enabling accurate folding at the preset position, reducing the amount of misalignment between different layers of the electrode plate, improving the flatness of the folded first electrode plate 1, and in turn, improving the performance of the electrode assembly 10.

In some embodiments, as shown in FIG. 4, the material-removed region 13 is disposed on the active material layer 12 on the first side alone. The depth of the material-removed region 13 is h, the thickness of the active material layer 12 on the first side is t1, and the thickness of the active material layer 12 on a second side is t2, satisfying: $(t1 + t2) \times 10\% \leq h \leq t1$.

During bending of the first electrode plate 1, the difficulty of bending depends on the strength of the first electrode plate 1 at the bend, and the strength at the bend depends on the thickness of the first electrode plate 1. The current collector 11 made of a metal material is tough and bendable. Therefore, the depth of the material-removed region 13 is mainly considered in relation to the total thickness of the active material layers 12 on the two sides.

The condition $h \geq (t1 + t2) \times 10\%$ limits the minimum depth of the material-removed region 13, makes the first electrode plate 1 more easily bendable, enables accurate folding at the preset position, reduces the amount of misalignment between different layers of the electrode plate, improves the flatness of the folded first electrode plate 1, and in turn, improves the performance of the electrode assembly 10. The condition $h \leq t1$ limits the maximum depth of the material-removed region 13, and prevents the material-removed region 13 from excessively reducing the strength at the bend.

For example, in a case that the thicknesses of the active material layers 12 on the two sides are the same, h may be 10%, 15%, 20%, 25%, 30%, 35%, 40%, 45%, 50%, or the like of (t1+t2). For example, both t1 and t2 range from 35 $\mu$m to 120 $\mu$m, or, depending on the actual situation, t1 and t2 may be other values beyond this range.

In these embodiments, the depth of the material-removed region 13 is controlled to fall within an appropriate value range, thereby making the first electrode plate 1 more easily bendable, enabling accurate folding at the preset position, reducing the amount of misalignment between different layers of the electrode plate, improving the flatness of the folded first electrode plate 1, and in turn, improving the performance of the electrode assembly 10. Moreover, the above arrangement prevents excessive reduction of the strength at the bend caused by an excessive depth of the material-removed region 13, thereby preventing the electrode plate from breaking off during folding, improving the yield rate of the electrode assembly 10 during production, and also preventing the electrode plate from breaking off at the material-removed region 13 due to expansion and deformation of the electrode plate after long-term use of the battery cell.

In some embodiments,

$$(t1 + t2) \times 20\% \leq h \leq (t1 + t2) \times 40\%.$$

For example, h may be 20%, 25%, 30%, 35%, 40%, or the like of (t1+t2).

In these embodiments, by setting the depth of the material-removed region 13 to fall within a preferred range, a better trade-off of the first electrode plate 1 is achieved between bendability and prevention of breakage.

In some embodiments, as shown in FIG. 6 to FIG. 9, among the active material layers 12 on both sides, the active material layer 12 on the second side includes a plurality of material-removed regions 13 disposed at intervals along the extension direction L.

The material-removed regions 13 on the first side and the second side may be directly opposite to each other or staggered from each other. At the same bend, the material-removed region 13 may be disposed on the active material layer 12 on the first side alone, or the material-removed region 13 may be disposed on the active material layer 12 on the second side alone, or the material-removed regions 13 may be disposed on the active material layers 12 on both sides. The interval between the material-removed regions 13 on the active material layer 12 on one side may be the same as or different from the interval on the other side.

In these embodiments, the material-removed region 13 is disposed on the active material layers 12 on both sides. The material-removed region 13 may be disposed on both the inner side and the outer side in at least a part of the bends. With the strength at the bend being the same, the above arrangement reduces the depth of the material-removed region 13 on a single side, makes the force distribution more uniform at the bend of the first electrode plate 1, prevents a single side from being much stressed at the bend during the bending, and avoids breakage of the electrode plate, thereby improving the yield rate of the electrode assembly 10 during production, and also preventing the electrode plate from breaking off at the material-removed region 13 due to expansion and deformation of the electrode plate after long-term use of the battery cell.

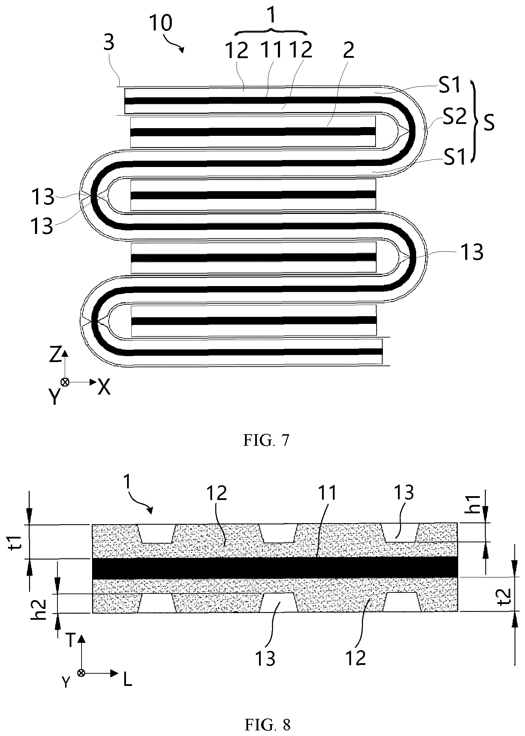

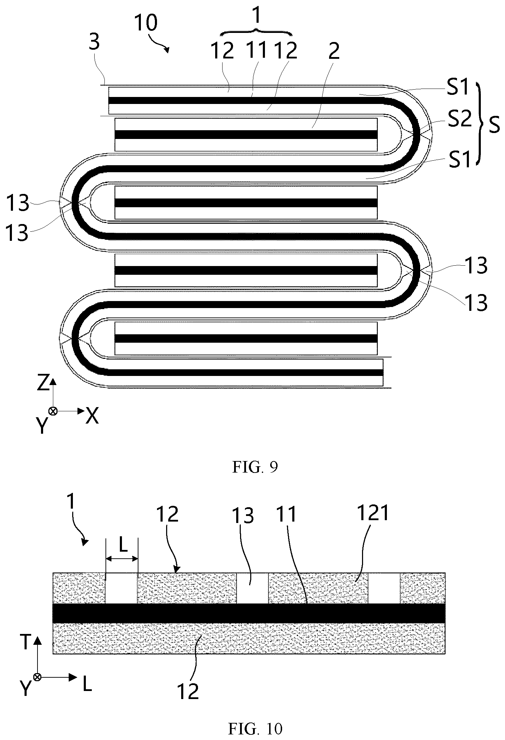

In some embodiments, as shown in FIG. 8 and FIG. 9, the material-removed region 13 is disposed on the active material layers 12 on both sides at the same bend.

As shown in FIG. 8, the material-removed region 13 is disposed on the active material layers 12 on both sides when the first electrode plate 1 is in an unfolded state, and the material-removed regions 13 at the same position to be bent are directly opposite to each other. The term "directly opposite to" here still ignores the error caused by the fact that the material-removed regions 13 are located on the inner side and outer side respectively at the bend. Optionally, the distance between two adjacent material-removed regions 13 on the same side is configured in such a way that the material-removed region 13 is disposed at each bend.

As shown in FIG. 9, after the first electrode plate 1 is folded to form an electrode assembly 10, the material-removed region 13 is disposed on the inner and outer active material layers 12 at each bend of the first electrode plate 1. The material-removed regions 13 on both sides are directly opposite to each other in the opening direction X at the bend.

In this embodiment, the material-removed region 13 is disposed on the active material layers 12 on both sides at the same bend, so that the material-removed region 13 is disposed on both the inner side and the outer side at the bend. With the strength at the bend being the same, the above arrangement reduces the depth of the material-removed region 13 on a single side, makes the force distribution more uniform at the bend of the first electrode plate 1, prevents a single side from being much stressed at the bend during the bending, and avoids breakage of the electrode plate, thereby improving the yield rate of the electrode assembly 10 during production, and also preventing the electrode plate from breaking off at the material-removed region 13 due to expansion and deformation of the electrode plate after long-term use of the battery cell.

In some embodiments, in the extension direction L, the plurality of material-removed regions 13 on the active material layer 12 on the first side are disposed at a first preset interval. The plurality of material-removed regions 13 on the active material layer 12 on the second side are disposed at a second preset interval. The second preset interval is n times the first preset interval, where n = 1, 2, 3....

Optionally, in the first electrode plate 1 in an unfolded state shown in FIG. 6, the second preset interval is 2 times the first preset interval. The number of material-removed regions 13 on the active material layer 12 on the second side is half the number of material-removed regions 13 on the active material layer 12 on the first side. Although only one material-removed region 13 is illustrated on the active material layer 12 on the second side in the drawing, one material-removed region 13 is actually disposed at every other bend in the extension direction L. At a bend where the material-removed region 13 is disposed on both sides, the material-removed regions 13 on the two sides are directly opposite to each other.

FIG. 7 is a schematic structural diagram of an electrode assembly 10 formed by folding the first electrode plate 1 shown in FIG. 6. For the bend on one side (left side), the material-removed region 13 is disposed on both the inner side and the outer side of the first electrode plate 1 at the bend, and the inner material-removed region is directly opposite to the outer material-removed region. For the bend on the other side (right side), the material-removed region 13 is disposed on only the inner side at the bend of the first electrode plate 1. If an error between the material-removed regions 13 on the two sides occurs during the processing, the problem of skewness of the electrode assembly 10 may be rectified by shaping.

Optionally, in the first electrode plate 1 in an unfolded state shown in FIG. 8, the second preset interval is 1 times the first preset interval. The number of material-removed regions 13 on the active material layer 12 on the second side is equal to the number of material-removed regions 13 on the active material layer 12 on the first side. Although only three material-removed regions 13 are illustrated on each of the active material layers 12 on the two sides in the drawing, one material-removed region 13 is actually disposed at every bend in the extension direction L. At a bend where the material-removed region 13 is disposed on both sides, the material-removed regions 13 on the two sides are directly opposite to each other.

FIG. 9 is a schematic structural diagram of an electrode assembly 10 formed by folding the first electrode plate 1 shown in FIG. 8. For the bends on the two sides, the material-removed region 13 is disposed on both the inner side and the outer side of the first electrode plate 1 at each bend, and the inner material-removed region is directly opposite to the outer material-removed region. If an error between the material-removed regions 13 on the two sides occurs during the processing, the problem of skewness of the electrode assembly 10 may be rectified by shaping.

Optionally, in a case that the number of material-removed regions 13 is equal between the active material layers 12 on the two sides, the material-removed regions 13 on the active material layer 12 on one side may be staggered from the material-removed regions on the active material layer on the other side. To be specific, after the electrode assembly 10 is formed by folding, only one material-removed region 13 is disposed at each bend, and all of the material-removed regions 13 are located on the inner side or outer side.

In these embodiments, by setting appropriate intervals for the material-removed regions 13 on the active material layers 12 on the two sides separately, the material-removed regions 13 at the bend can be configured based on the actual folding needs, thereby ensuring convenience of folding and preventing electrode plate breakage caused by excessive reduction of strength.

In some embodiments, as shown in FIG. 6 and FIG. 8, the thicknesses of the active material layers 12 on the two sides are t1 and t2 respectively. The depth of the material-removed region 13 disposed on the active material layer 12 on the first side is h1, and the depth of the material-removed region 13 disposed on the active material layer 12 on the second side is h2, satisfying: $(t1 + t2) \times 10\% \leq h1 + h2 \leq t1 + t2$.

During bending of the first electrode plate 1, the difficulty of bending depends on the strength of the first electrode plate 1 at the bend, and the strength at the bend depends on the thickness of the first electrode plate 1. The current collector 11 made of a metal material is tough and bendable. Therefore, the total depth of the material-removed regions 13 on the two sides is mainly considered in relation to the total thickness of the active material layers 12 on the two sides.

The condition $h1 + h2 \geq (t1 + t2) \times 10\%$ limits the sum of the minimum depths of the material-removed regions 13 on the two sides, makes the first electrode plate 1 more easily bendable, enables accurate folding at the preset position, reduces the amount of misalignment between different layers of the electrode plate, improves the flatness of the folded first electrode plate 1, and in turn, improves the performance of the electrode assembly 10. The condition $h1 + h2 \leq t1 + t2$ limits the sum of the maximum depths of the material-removed regions 13 on the two sides, and prevents the material-removed regions 13 from excessively reducing the strength at the bend. The conditions $h1 \leq t1$ and $h2 \leq t2$ also need to be satisfied in addition to the above condition.

For example, in a case that the thicknesses of the active material layers 12 on the two sides are the same, (h1+h2) may be 10%, 15%, 20%, 25%, 30%, 35%, 40%, 45%, 50%, 55%, 60%, 65%, 70%, 75%, 80%, 85%, 90%, 95%, 100%, or the like of (t1+t2). For example, both t1 and t2 range from 35 μm to 120 μm, or, depending on the actual situation, t1 and t2 may be other values beyond this range.

In these embodiments, the sum of the depths of the material-removed regions 13 on the two sides is controlled to fall within an appropriate value range, thereby making the first electrode plate 1 more easily bendable, enabling accurate folding at the preset position, reducing the amount of misalignment between different layers of the electrode plate, improving the flatness of the folded first electrode plate 1, and in turn, improving the performance of the electrode assembly 10. Moreover, the above arrangement prevents excessive reduction of the strength at the bend caused by an excessive depth of the material-removed region 13, thereby preventing the electrode plate from breaking off during folding, improving the yield rate of the electrode assembly 10 during production, and also preventing the electrode plate from breaking off at the material-removed region 13 due to expansion and deformation of the electrode plate after long-term use of the battery cell.

In some embodiments,

$$(t1 + t2) \times 20\% \leq h1 + h2 \leq (t1 + t2) \times 40\%.$$

For example, (h1+h2) may be 20%, 25%, 30%, 35%, 40%, or the like of (t1+t2).

In these embodiments, by setting the sum of the depths of the material-removed regions 13 on the two sides to fall within a preferred range, a better trade-off of the first electrode plate 1 is achieved between bendability and prevention of breakage.

In some embodiments, as shown in FIG. 10, the active material layer 12 includes a plurality of active material regions 121 spaced apart along an extension direction L of the first electrode plate 1. The material-removed region 13 is formed between two adjacent active material regions 121.

The current collector 11 is a continuous elongated structure. The active material layer 12 is intermittently applied on the current collector 11 along the entire extension direction L to form a plurality of active material regions 121. A clearance L exists between two adjacent active material regions 121. For example, at the clearance L, the current collector 11 may be exposed, or an adhesive or an insulation layer such as AT9/AT11 may be applied.

In these embodiments, the depth of the material-removed region 13 is equal to the thickness of the active material layer 12. In this way, the current collector 11 is not adversely affected during formation of the material-removed region 13. Moreover, the material-removed region 13 can be formed directly in a process of applying a slurry to form an active material layer 12, thereby eliminating the subsequent additional step of processing the material-removed region 13, and improving the production efficiency of the first electrode plate 1.

In some embodiments, the material-removed region 13 extends continuously in the width direction Y.

The material-removed region 13 may be a groove, and the groove of a small width may be a nick. For example, the groove may be formed by a metal tool, a laser tool, or liquid etching. The cross-section of the groove may be a rectangle, trapezoid, triangle, or the like.

In these embodiments, the material-removed region 13 extends continuously along the width direction Y, thereby facilitating processing, and achieving a superior effect of guiding the bending of the first electrode plate 1. Moreover, the material-removed region 13 processed in this way can achieve a relatively narrow width, improve the precision of the bending position, and reduce the amount of misalignment between two adjacent layers of the electrode plate stacked in the electrode assembly 10, thereby endowing the battery with good electrochemical performance.

In some embodiments, the material-removed region 13 penetrates the active material layer 12 in the width direction Y.

In these embodiments, the material-removed region 13 extends along the entire width of the active material layer 12, thereby making the first electrode plate 1 bendable along the material-removed region 13 over the entire width, making the first electrode plate 1 more easily bendable, improving the precision of the bending position, reducing the amount of misalignment between two adjacent layers of the electrode plate stacked in the electrode assembly 10, thereby endowing the battery with good electrochemical performance.

In some embodiments, as shown in FIG. 4, the material-removed region 13 gradually increases in width from a bottom 131 to an opening 132 in the extension direction L of the first electrode plate 1.

The material-removed region 13 forms a flared groove from the bottom 131 to the opening 132. The bottom 131 is not lower than the surface of the current collector 11. The bottom 131 is a surface of the material-removed region 13, the surface being close to the current collector 11. Optionally, the cross-section of the material-removed region 13 may be trapezoidal, triangular, or the like. After the electrode plate is bent, when the material-removed region 13 is located on both the inner side and outer side at the bend, the final dimensions may differ between the inner side and the outer side. FIG. 5 illustrates just the theoretical material-removed regions 13, without considering the small differences in dimensions between the inner and outer material-removed regions 13.

In these embodiments, the cross-section of the material-removed region 13 is configured as trapezoidal. Therefore, when the material-removed region 13 is located on the inner side of the bend, even if the radius of curvature on the inner side of the bend is relatively small or the width of the material-removed region 13 along the extension direction L is relatively small, interference is still not prone to occur between the two sides of the opening 132. In this way, the first electrode plate 1 is smoothly bendable without powder shedding. When the material-removed region 13 is located on the outer side of the bend, due to a relatively large radius of curvature on the outer side of the bend, the opening 132 can be further widened during bending of the electrode plate to fit the relatively large radius of curvature, so that the first electrode plate 1 can be bent smoothly.

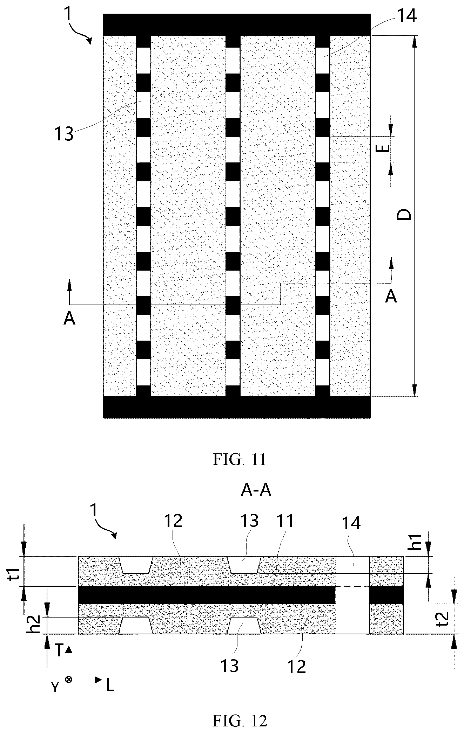

In some embodiments, as shown in FIG. 11 and FIG. 12, a plurality of through-holes 14 are created in at least a part of the bends of the first electrode plate 1. The plurality of through-holes 14 are spaced apart along the width direction Y.

For example, the through-holes 14 may be a circular hole, a rectangular hole, an elliptical hole, or a rhombic hole. The through-holes 14 can also reduce the strength at the bend, and serve the same function as the material-removed region 13. The plurality of through-holes 14 may be disposed at equal intervals.

In these embodiments, a plurality of through-holes 14 are created at the bend to also reduce the strength at the bend. Due to the relatively small thickness of the first electrode plate 1, this structure avoids the need to precisely control the depth of the groove, and can lower the requirement on the processing precision. In addition, the through-holes 14 can substantially reduce the strength of the second electrode plate 1, and facilitate the bending.

In some embodiments, the material-removed region 13 is disposed in a part of the bends, and the through-hole 14 is disposed in another part of the bends.

In these embodiments, the material-removed region 13 is disposed in a part of the bends, and the through-hole 14 is disposed in another part of the bends, so that the material-removed region 13 or through-hole 14 can be flexibly disposed as required.

In some embodiments, both the material-removed region 13 and the through-hole 14 are disposed in at least a part of the bends.

For example, at the same bend, all the through-holes 14 are superimposed on the material-removed regions 13, and combined together to more effectively reduce the strength of the first electrode plate 1. As shown in FIG. 11, the material-removed regions 13 extend along the width direction Y of the first electrode plate 1 over the entire width. The plurality of through-holes 14 are superimposed on the material-removed regions 13, and the plurality of through-holes 14

are spaced apart along the width direction. Alternatively, at the same bend, the plurality of through-holes 14 are staggered from all the material-removed regions 13 along the width direction Y. For example, the material-removed regions 13 are disposed in a middle region of the first electrode plate 1 along the width direction Y, and the through-holes 14 are disposed in the regions on both sides. Alternatively, at the same bend, a part of the through-holes 14 are superimposed on the material-removed regions 13, and another part of the through-holes 14 are staggered from the material-removed regions 13.

In these embodiments, both the material-removed region 13 and the through-hole 14 are disposed at the same bend, so that the material-removed region and the through-hole together play a role in reducing the strength at the bend. Due to the through-hole 14, the depth of the material-removed region 13 can be appropriately reduced to achieve the same strength, thereby alleviating the force on the first electrode plate 1 at the bend, and reducing the risk of breakage while ensuring bendability of the first electrode plate 1.

In some embodiments, as shown in FIG. 11, the number of the through-holes 14 is N, a dimension of the through-hole 14 along the width direction Y is E, and a width of the first electrode plate 1 is D, satisfying: $D \times 10\% \leq N \times E \leq D \times 90\%$.

For example, $N \times E$ accounts for 10%, 15%, 20%, 25%, 30%, 35%, 40%, 45%, 50%, 55%, 60%, 65%, 70%, 75%, 80%, 85%, or 90% of D.

In these embodiments, a first electrode plate 1 that is easy to fold is formed by controlling the depth of the material-removed region 13 and the proportion of the total dimensions of the plurality of through-holes 14 along the width direction to the width of the first electrode plate 1. In this way, a composite electrode plate is easy to fold to form an electrode assembly 10 without breaking.

In some embodiments, the electrode assembly 10 further includes a second electrode plate 2. At least one first electrode plate 1 is bent to form at least one bend portion S. The bend portion S includes at least one bend section S2 and at least two straight sections S1. Two adjacent straight sections S1 are interconnected by the bend section S2. For each bend portion S, the second electrode plate 2 is disposed between every two adjacent straight sections S1. The second electrode plate 2 is of an opposite polarity to the adjacent first electrode plate 1.

The electrode assembly 10 assumes a stacked structure. At least one second electrode plate 2 is disposed. The second electrode plate 2 is a discrete cut electrode plate, and may assume a rectangular structure with length approximate to width. In a product of the electrode assembly 10, the second electrode plate assumes a flat plate structure. Each second electrode plate 2 forms one layer in the stacking direction.

The composite electrode plate formed by at least one first electrode plate 1 is bent to form at least one bend portion S. In forming at least two bend portions S, the at least two bend portions S are sequentially connected to form a continuously bent structure. For a bend portion S, at least two straight sections S1 are stacked along the stacking direction Z. Two adjacent straight sections S1 are connected to each other by a bend section S2. The bend section S2 may assume an arc structure, such as a circular arc structure. For the adjacent bend portions S, two straight sections S1 close to each other in the adjacent bend portions S are also connected by a bend portion S. In this way, for the entire composite electrode plate formed by bending, the composite electrode plate includes at least two straight sections S1 disposed along the stacking direction Z. All the straight sections S1 are connected sequentially by the bend sections S2. One second electrode plate 2 may be disposed between every two adjacent straight sections S1.

The bend portion S may be V-shaped, Z-shaped, W-shaped, or the like. For example, a V-shaped bend portion S may include two straight sections S1 and one bend section S2; a Z-shaped bend portion S includes three straight sections S1 and two bend sections S2, and the two bend sections S2 are oriented in opposite directions; and a W-shaped bend portion S includes four straight sections S1 and three bend sections S2.

For each bend portion S, a second electrode plate 2 is disposed between two adjacent straight sections S1. For adjacent bend portions S, a second electrode plate 2 may also be disposed between two straight sections S1 close to each other. In other words, the second electrode plate 2 is disposed between every two adjacent straight sections S1 in the electrode assembly 10, and the second electrode plate 2 is of an opposite polarity to the adjacent first electrode plate 1.

None of the ends of the second electrode plate 2 along the opening direction X of the bend section S2 extends beyond the straight section S1. The first end of the second electrode plate 2 is close to the bend portion S. The first end does not extend beyond a junction between the straight section S1 and the inner side of the bend section S2, thereby preventing the first end of the second electrode plate 2 from abutting the bend section S2, avoiding warpage at the edge of the second electrode plate 2, and avoiding shedding of the active material from the inner side of the bend portion S2. The second end of the second electrode plate 2 is located away from the bend section S2. The second end does not extend beyond the junction between the straight section S1 and the outer side of the adjacent bend section S2, thereby enabling the straight section S1 to stably support the entire second electrode plate 2, and preventing the edge of the second electrode plate 2 from extending beyond and dangling from the straight section S1 and deforming. This structure enables the straight section S1 to stably support the second electrode plate 2, prevents the edge of the second electrode plate 2 from warping and deforming, makes the electrode assembly 10 flatter after being compacted, and also prevents the second electrode plate 1 from abutting the inner side of the bend portion S2 to cause shedding of the active material, thereby ensuring high performance of the electrode assembly 10.

In these embodiments, in view of a relatively small bending radius of a stacked-type electrode assembly 10 at the bend, a material-removed region 13 of an appropriate depth is disposed at the bend, thereby making the first electrode plate 1 more easily bendable, enabling accurate folding at the preset position, reducing the amount of misalignment between different layers of the electrode plate, improving the flatness of the folded first electrode plate 1, and in turn, improving the performance of the electrode assembly 10. Moreover, the above arrangement prevents excessive reduction of the strength at the bend caused by an excessive depth of the material-removed region 13, thereby preventing the electrode plate from breaking off during folding, improving the yield rate of the electrode assembly 10 during production, and also preventing the electrode plate from breaking off at the material-removed region 13 due to expansion and deformation of the electrode plate after long-term use of the battery cell.

In some embodiments, the material-removed region 13 is located in the bend section S2 and extends along the width direction Y.

For example, the bend section S2 assumes an arc structure, such as a circular arc structure. The material-removed region 13 may be located at a middle position of the bend section S2 along the extension direction L.

In these embodiments, the material-removed region 13 is disposed in the bend section S2, thereby guiding the first electrode plate 1 to fold along the material-removed region 13, making the first electrode plate 1 more easily bendable, enabling accurate folding at the preset position, reducing the amount of misalignment between different layers of the electrode plate, improving the flatness of the folded first electrode plate 1, and in turn, improving the performance of the electrode assembly 10.

In some embodiments, the electrode assembly 10 further includes at least two separation pieces 3 stacked together with the at least one first electrode plate 1 and bent together to form the at least one bend portion S. The first electrode plate 1 is disposed between the two adjacent separation pieces 3.

The separation piece 3 may be a separator. The type of the separator is not particularly limited in this application, and may be any well-known porous separator that is highly stable both chemically and mechanically.

As an example, the separator may be mainly made of a material that is at least one selected from glass fiber, nonwoven fabric, polyethylene, polypropylene, polyvinylidene difluoride, or ceramics. The separator may be a single-layer film or a multilayer composite film, without being particularly limited. When the separator is a multilayer composite film, materials in different layers may be identical or different, without being particularly limited. The separator may be a separate component located between the positive electrode and the negative electrode, or may be attached to a surface of the positive or negative electrode.

The separation piece 3 may be a solid electrolyte. The solid electrolyte serves functions of both transmitting ions and isolating the positive electrode from the negative electrode.

The separation piece 3 may include a separator base layer and a functional layer. The separator base layer may be at least one of polypropylene, polyethylene, poly(ethylene-co-propylene), polybutylene terephthalate, or the like. The functional layer may be a mixture layer of ceramic oxide and a binder. The separation piece 3 may be in an elongated shape after the bend portion S is spread out. Alternatively, in a case that the second electrode plate 2 is a continuous elongated structure, the separation piece 3 may be disposed intermittently along the extension direction of the first electrode plate 1.

The separation piece 3 may be larger than the first electrode plate 1 in width to more effectively separate the positive electrode plate from the negative electrode plate.

Before the electrode assembly 10 is formed, at least one first electrode plate 1 is stacked together with at least two separation pieces 3. The stacked structure is combined to form a continuous bendable composite electrode plate. The first electrode plate 1 and the separation piece 3 are disposed alternately. The separation piece 3 is disposed on both sides of the first electrode plate 1 to serve an insulating function. The separation piece 3 may be overlaid with a bonding layer on both sides. For example, the bonding layer is a PCS layer (PCS is an acronym of "PVDF coated separation layer"), where PVDF is an abbreviation of polyvinylidene fluoride. In a process of thermal bonding and applying a pressure to the first electrode plate 1 and the separation piece 3, a large number of point-distributed particles in the PCS layer are flattened to produce an adhesive force on the first electrode plate 1.

In a technical process, a plurality of second electrode plates 2 are disposed. The plurality of second electrode plates 2 are alternately placed on the two separation pieces 3 located outside, and are pressed by a roller so that the second electrode plates 2 are attached to the separation pieces 3 outside through the PCS layer. Subsequently, the composite electrode plate that includes the first electrode plate 1, the second electrode plate 2, and the separation piece 3 is folded.

In another technical process, a plurality of second electrode plates 2 are disposed. The composite electrode plate is folded. During the folding, the plurality of second electrode plates 2 are inserted sequentially from the openings on both sides to form an electrode assembly 10. The electrode assembly 10 is pressed along the stacking direction Z so that the plurality of second electrode plates 2 are attached to the separation piece 3 outside through the PCS layer.

Alternatively, the electrode plates may be combined together by cold-pressing, electrophoresis, or bonding instead.

In these embodiments, by bending the separation piece 3 and the first electrode plate 1 together, the first electrode plate 1 can be insulated from the second electrode plate 2 by the separation piece 3, thereby improving the performance and safety of the electrode assembly 10 in use.

In some embodiments, the first electrode plate 1 is a negative electrode plate. Accordingly, all the second electrode plates 2 are positive electrode plates.

After being folded, the first electrode plate 1 is located outermost in the stacking direction Z. Generally, the material of the positive active material in the positive electrode plate is a ternary material, lithium manganese oxide, lithium iron phosphate, or the like. The material of the negative active material in the negative electrode plate is typically graphite or silicon. Because the material of the positive active material is more expensive than the material of the negative active material, the outermost layer of the electrode assembly 10 is set to be the negative electrode plate, thereby reducing the number of layers of the folded positive electrode plate, and fully utilizing the positive active material of the positive electrode plate.

These embodiments can both improve the energy utilization rate of the electrode assembly 10 and reduce the cost of the electrode assembly 10.

The following describes specific embodiments of this application.

In a first embodiment, as shown in FIG. 4 and FIG. 5, the electrode assembly 10 includes one continuous first electrode plate 1, two continuous separation pieces 3, and a plurality of second electrode plates 2. The first electrode plate 1 is of an opposite polarity to the second electrode plate 2. The first electrode plate 1 and the two separation pieces 3 are stacked up. The first electrode plate 1 is located between the two separation pieces 3 to form a composite electrode plate. The composite electrode plate is bent to form at least one bend portion S. The bend portion S includes at least one bend section S2 and at least two straight sections S1. Two adjacent straight sections S1 are interconnected by the bend section S2. In the electrode assembly 10, one second electrode plate 2 is disposed between two adjacent straight sections S1 along the stacking direction Z.

In the schematic diagram of the first electrode plate 1 in an unfolded state in FIG. 4, the material-removed region 13 is disposed on the active material layer 12 on a single side. A plurality of material-removed regions 13 are disposed at equal intervals on the active material layer 12 on the first side along the extension direction L. The distance between two adjacent material-removed regions 13 is configured in such a way that a material-removed region 13 is disposed at each bend. After the first electrode plate 1 is bent to form the electrode assembly 10 shown in FIG. 5, the material-removed region 13 is disposed at each bend. In the extension direction L of the first electrode plate 1, a plurality of material-removed regions 13 on the first side are located on the inner side and the outer side alternately at the bend.

As shown in FIG. 4 and FIG. 5, after the electrode assembly 10 is formed by folding, in theory, the bend sections S2 on the side are aligned with each other. However, in practice, an amount of folding misalignment is inevitable. According to standards, the amount of folding misalignment does not exceed $\pm 0.3$ mm. The amount of misalignment is a distance by which the bend sections S2 on the same side are misaligned in the opening direction X of the bend sections. Table 1 below shows experimental data of the misalignment amount of the bend section S2 in the electrode assembly 10. The misalignment amount in the table is measured by assuming that the value of h/(t1+t2) is 0%, 5%, 8%, 10%, 15%, and 20%, separately. In measuring the misalignment amount of a specified bend section S2, the outer edge of an adjacent bend section S2 already formed on the same side in the stacking direction Z may be used as a measurement reference, and N points, for example, 32 points, are selected at intervals along the width direction Y on the outermost edge of a bend section S2 to be measured. The misalignment amount at each point is measured. If a point to be measured protrudes beyond the measurement reference along the opening direction X, the misalignment amount is a positive value. If a point to be measured is indented from the measurement reference along the opening direction X, the misalignment amount is a negative value. For example, a two-dimensional measurement instrument may be used for measuring the misalignment amount.

In practice, once a layer is folded, a bend section S2 may be measured. By controlling the misalignment amount of each bend section S2, the misalignment amount of each layer of electrode plate in the entire electrode assembly 10 can be ensured to be an appropriate value.

As can be seen from Table 1, when h/(t1+t2) is less than 10%, for example, h/(t1+t2) is 0%, 5%, or 8%, three comparative embodiments are provided, in which the misalignment amount of the bend section S2 goes beyond the technical requirements. When h/(t1+t2) is greater than or equal to 10%, for example, when h/(t1+t2) is 10%, 15%, 20%, or 40%, the misalignment amount of this bend section S2 can meet the requirements. Moreover, as can be seen from the three embodiments, the misalignment amount of the bend section S2 exhibits a tendency to decrease with the increase of the value of h/(t1+t2). In a case that the ratio of h to (t1+t2) is higher, a higher proportion of the depth of the material-removed region 13 leads to higher bendability and a smaller amount of misalignment of the folding.

**Table 1 Experimental data of** the **misalignment amount of a bend section S2 in** the **electrode assembly 10**

| h/(t1+t2) | | 0% | 5% | 8% | 10% | 15% | 20% | 40% |
|---|---|---|---|---|---|---|---|---|
| Amount of misalignment of folding (mm) | Position 1 | 8.11 | 3.23 | -2.51 | 0.29 | 0.29 | 0.15 | 0.22 |
| | Position 2 | 9.13 | 0.25 | -1.5 | 0.3 | 0.3 | 0.24 | 0.17 |
| | Position 3 | 7.67 | 1.47 | 0 | 0.28 | 0.3 | 0.27 | 0.15 |
| | Position 4 | 6.98 | 2.83 | 0.53 | 0.26 | 0.21 | 0.28 | 0.2 |
| | Position 5 | 5.22 | 4.91 | 1 | 0.3 | 0.15 | 0.3 | 0.28 |
| | Position 6 | 4.44 | 5.29 | 0.45 | 0.27 | 0.3 | 0.25 | 0.17 |
| | Position 7 | 2.65 | 6.45 | 1.28 | 0.29 | 0.3 | 0.29 | 0.11 |
| | Position 8 | 0 | 6.99 | 0.11 | 0.22 | 0.28 | 0.28 | 0 |
| | Position 9 | -4.33 | 8.12 | 0 | 0.3 | 0.27 | 0.22 | 0.15 |
| | Position 10 | -6.78 | 7.32 | -0.38 | 0.19 | 0.3 | 0.15 | 0.19 |
| | Position 11 | -7.31 | 7.92 | -0.62 | 0.15 | 0.17 | 0.05 | 0.18 |
| | Position 12 | -6.11 | 4.69 | -0.1 | 0 | 0 | 0.12 | 0.09 |
| | Position 13 | -9.24 | 5.24 | -0.18 | 0.22 | 0.09 | 0.07 | 0.14 |
| | Position 14 | -7.64 | 3.15 | 0 | -0.05 | -0.15 | 0 | 0.25 |
| | Position 15 | -5.88 | 0 | -0.15 | -0.27 | -0.15 | 0.21 | 0.18 |
| | Position 16 | -3.43 | -3.55 | 0.12 | -0.3 | 0 | 0.18 | 0 |
| | Position 17 | 0.15 | -4.79 | 0.39 | -0.28 | 0.14 | 0.15 | -0.11 |
| | Position 18 | 2.85 | -6.1 | 0.51 | -0.11 | 0.01 | 0 | 0.15 |
| | Position 19 | 5.19 | -6.9 | 0.93 | -0.13 | 0.09 | -0.09 | -0.2 |
| | Position 20 | 3.54 | -8.26 | 0.35 | 0 | -0.05 | -0.11 | -0.21 |
| | Position 21 | 4.67 | -6.51 | 0.25 | 0.15 | -0.15 | -0.17 | -0.15 |
| | Position 22 | 6.33 | -5.85 | 0 | 0.28 | -0.23 | -0.2 | -0.17 |
| | Position 23 | 6.98 | -4.72 | 0.15 | 0.25 | -0.3 | -0.21 | -0.06 |
| | Position 24 | 7.23 | -1.66 | 0.36 | 0.3 | -0.25 | -0.27 | 0 |
| | Position 25 | 4.55 | 0 | 0.55 | 0.29 | -0.18 | -0.29 | 0.08 |
| | Position 26 | 0.91 | 3.23 | 0.74 | 0.27 | 0 | -0.22 | 0.16 |
| | Position 27 | -3.31 | 4.1 | 0.49 | 0.25 | 0.05 | -0.15 | 0.12 |
| | Position 28 | -5.79 | 4.98 | 0.41 | 0.17 | 0.19 | -0.09 | 0 |
| | Position 29 | -4.21 | 3.45 | 0.25 | 0 | 0.05 | -0.03 | 0.08 |
| | Position 30 | 0 | 5.62 | 0.25 | 0.21 | 0.11 | 0 | -0.15 |
| | Position 31 | 5.74 | 7.2 | 0.17 | -0.3 | 0.14 | 0.09 | -0.17 |
| | Position 32 | 3.44 | 6.9 | 0.48 | -0.28 | 0.12 | 0.12 | -0.09 |

In the second embodiment, as shown in FIG. 6 and FIG. 7, different from the first embodiment, for the first electrode plate 1 in an unfolded state shown in FIG. 6, the interval between the material-removed regions 13 on the active material layer 12 on the first side is the same as that shown in FIG. 4, and the material-removed regions 13 on the active material layer 12 on the second side are disposed at intervals at all bends. The number of material-removed regions 13 on the active material layer 12 on the second side is half the number of material-removed regions 13 on the active material layer 12 on the first side.

FIG. 7 is a schematic structural diagram of an electrode assembly 10 formed by folding the first electrode plate 1 shown in FIG. 6. For the bend on one side (left side), the material-removed region 13 is disposed on both the inner side and the outer side of the first electrode plate 1 at the bend, and the inner material-removed region is directly opposite to the outer material-removed region. For the bend on the other side (right side), the material-removed region 13 is disposed on only the inner side at the bend of the first electrode plate 1.

In the second embodiment, as shown in FIG. 8 and FIG. 9, the difference from the second embodiment lies in that, for the first electrode plate 1 in an unfolded state shown in FIG. 8, the number of material-removed regions 13 on the active material layer 12 on the second side is equal to the number of material-removed regions 13 on the active material layer 12 on the first side; the material-removed region 13 is disposed at each bend on the active material layers 12 on both sides; and the material-removed regions 13 on the two sides at the same bend are directly opposite to each other.

FIG. 9 is a schematic structural diagram of an electrode assembly 10 formed by folding the first electrode plate 1 shown in FIG. 8. For the bends on the two sides, the material-removed region 13 is disposed on both the inner side and the outer side of the first electrode plate 1 at each bend, and the inner material-removed region is directly opposite to the outer material-removed region.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. An electrode assembly (10), comprising at least one first electrode plate (1), wherein the first electrode plate (1) is bent and comprises:

   a current collector (11); and
   an active material layer (12), disposed on the current collector (11), wherein the active material layer (12) comprises a material-removed region (13) in at least a part of bends of the first electrode plate, the material-removed region (13) extends along a width direction (W) of the first electrode plate (1), and a depth of the material-removed region (13) does not exceed a thickness of the active material layer (12) at which the material-removed region is located.

2. The electrode assembly (10) according to claim 1, wherein the current collector (11) is coated with the active material layer (12) on both sides, and the material-removed region (13) is disposed on the active material layer (12) on at least one side.

3. The electrode assembly (10) according to claim 2, wherein, among the active material layers (12) on both sides, the active material layer (12) on a first side comprises a plurality of material-removed regions (13) disposed at intervals along an extension direction (L) of the first electrode plate (1).

4. The electrode assembly (10) according to claim 3, wherein, among the active material layers (12) on both sides, the active material layer (12) on a second side comprises a plurality of material-removed regions (13) disposed at intervals along the extension direction (L).

5. The electrode assembly (10) according to claim 4, wherein the material-removed region (13) is disposed on the active material layers (12) on both sides at a same bend.

6. The electrode assembly (10) according to claim 4 or 5, wherein, in the extension direction (L), the plurality of material-removed regions (13) on the active material layer (12) on the first side are disposed at a first preset interval, the plurality of material-removed regions (13) on the active material layer (12) on the second side are disposed at a second preset interval, and the second preset interval is n times the first preset interval, wherein n = 1, 2, 3....

7. The electrode assembly (10) according to claim 2 or 3, wherein the material-removed region (13) is disposed on the active material layer (12) on a first side alone, the depth of the material-removed region (13) is h, the thickness of the active material layer (12) on the first side is t1, and the thickness of the active material layer (12) on a second side is t2, satisfying: $(t1 + t2) \times 10\% \le h \le t1$.

8. The electrode assembly (10) according to claim 7, wherein $(t1 + t2) \times 20\% \le h \le (t1 + t2) \times 40\%$.

9. The electrode assembly (10) according to any one of claims 4 to 6, wherein the thicknesses of the active material layers (12) on the two sides are t1 and t2 respectively, the depth of the material-removed region (13) disposed on the active material layer (12) on the first side is h1, and the depth of the material-removed region (13) disposed on the active material layer (12) on the second **side is** h2, satisfying: $(t1 + t2) \times 10\% \leq h1 + h2 \leq t1 + t2$.

10. The electrode assembly (10) according to claim 9, wherein $(t1 + t2) \times 20\% \leq h1 + h2 \leq (t1 + t2) \times 40\%$.

11. The electrode assembly (10) according to any one of claims 1 to 10, wherein the active material layer (12) comprises a plurality of active material regions (121) spaced apart along an extension direction (L) of the first electrode plate (1), and the material-removed region (13) is formed between two adjacent active material regions (121).

12. The electrode assembly (10) according to any one of claims 1 to 11, wherein the material-removed region (13) extends continuously in the width direction (W).

13. The electrode assembly (10) according to claim 12, wherein the material-removed region (13) penetrates the active material layer (12) in the width direction (W).

14. The electrode assembly (10) according to any one of claims 1 to 13, wherein the material-removed region (13) gradually increases in width from a bottom (131) to an opening (132) in the extension direction (L) of the first electrode plate (1).

15. The electrode assembly (10) according to any one of claims 1 to 14, wherein a plurality of through-holes (14) are created in at least a part of the bends of the first electrode plate (1), and the plurality of through-holes (14) are spaced apart along the width direction (W).

16. The electrode assembly (10) according to claim 15, wherein the material-removed region (13) is disposed in a part of the bends, and the through-hole (14) is disposed in another part of the bends.

17. The electrode assembly (10) according to claim 15, wherein both the material-removed region (13) and the through-hole (14) are disposed in at least a part of the bends.

18. The electrode assembly (10) according to any one of claims 15 to 17, wherein a number of the through-holes (14) is N, a dimension of the through-hole (14) along the width direction (W) is E, and a width of the first electrode plate (1) is D, satisfying: $D \times 10\% \leq N \times E \leq D \times 90\%$.

19. The electrode assembly (10) according to any one of claims 1 to 18, further comprising a second electrode plate (2), wherein at least one first electrode plate (1) is bent to form at least one bend portion (S), the bend portion (S) comprises at least one bend section (S2) and at least two straight sections (S1), and two adjacent straight sections (S1) are interconnected by the bend section (S2); and
for each bend portion (S), the second electrode plate (2) is disposed between every two adjacent straight sections (S1), and the second electrode plate (2) is of an opposite polarity to the adjacent first electrode plate (1).

20. The electrode assembly (10) according to claim 19, wherein the material-removed region (13) is located in the bend section (S2) and extends along the width direction (Y).

21. The electrode assembly (10) according to any one of claims 1 to 20, further comprising at least two separation pieces (3) stacked together with the at least one first electrode plate (1) and bent together to form the at least one bend portion (S), wherein the first electrode plate (1) is disposed between the two adjacent separation pieces (3).

22. The electrode assembly (10) according to any one of claims 1 to 21, wherein the first electrode plate (1) is a negative electrode plate.

23. A battery cell (100), comprising the electrode assembly (10) according to any one of claims 1 to 22.

24. A battery (200), comprising the battery cell (100) according to claim 23.

25. An electrical device, comprising the battery cell (100) according to claim 23, and/or the battery (200) according to claim 24 and configured to provide electrical energy for the electrical device.

FIG. 1

FIG. 2

FIG. 3

FIG. 4

FIG. 5

FIG. 6

FIG. 7

FIG. 8

FIG. 9

FIG. 10

1

14

13

E

D

FIG. 11

A-A

1

12    13  11    14

t1

h1

h2

t2

T

Y    L

13    12

FIG. 12

## INTERNATIONAL SEARCH REPORT

International application No.

**PCT/CN2022/143970**

### A. CLASSIFICATION OF SUBJECT MATTER

H01M10/0583(2010.01)i; H01M10/04(2006.01)i; H01M4/13(2010.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNTXT, VEN, ENTXT, CNKI: 电池, 电极组件, 极片, 弯折, 去除区, 凹槽, 深度, 厚度, electrode assembly, battery, electrode plate, bent, removal area, groove, depth, thickness

### C. DOCUMENTS CONSIDERED TO BE RELEVANT

| Category* | Citation of document, with indication, where appropriate, of the relevant passages | Relevant to claim No. |
|---|---|---|
| X | CN 113302777 A (CONTEMPORARY AMPEREX TECHNOLOGY CO., LTD.) 24 August 2021 (2021-08-24)<br>description, pages 3-18, and figures 1-18 | 1-25 |
| X | CN 213340434 U (CONTEMPORARY AMPEREX TECHNOLOGY CO., LTD.) 01 June 2021 (2021-06-01)<br>description, paragraphs 20-96, and figures 1-22 | 1-25 |
| X | CN 107546420 A (CONTEMPORARY AMPEREX TECHNOLOGY CO., LTD.) 05 January 2018 (2018-01-05)<br>description, paragraphs 9-72, and figures 1-8 | 1-25 |
| X | CN 216872019 U (CONTEMPORARY AMPEREX TECHNOLOGY CO., LTD.) 01 July 2022 (2022-07-01)<br>description, paragraphs 22-99, and figures 1-8 | 1-25 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 September 2023** | **18 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/143970**

| Patent document cited in search report | | | Publication date (day/month/year) | Patent family member(s) | | | Publication date (day/month/year) |
|---|---|---|---|---|---|---|---|
| CN | 113302777 | A | 24 August 2021 | WO | 2021109363 | A1 | 10 June 2021 |
| | | | | KR | 20220093183 | A | 05 July 2022 |
| | | | | EP | 3907807 | A1 | 10 November 2021 |
| | | | | US | 2022021016 | A1 | 20 January 2022 |
| | | | | JP | 2023504474 | A | 03 February 2023 |
| | | | | CN | 112310423 | A | 02 February 2021 |
| | | | | CN | 112310423 | B | 15 March 2022 |
| CN | 213340434 | U | 01 June 2021 | WO | 2022062221 | A1 | 31 March 2022 |
| | | | | CN | 114586216 | A | 03 June 2022 |
| | | | | EP | 4047708 | A1 | 04 August 2022 |
| | | | | US | 2022344718 | A1 | 27 October 2022 |
| | | | | JP | 2023511400 | A | 17 March 2023 |
| CN | 107546420 | A | 05 January 2018 | None | | | |
| CN | 216872019 | U | 01 July 2022 | None | | | |

Form PCT/ISA/210 (patent family annex) (July 2022)